# EUROPEAN PATENT SPECIFICATION

(11) **EP 0 479 741 B1**
(45) Date of publication and mention of the grant of the patent: **12.04.1995**
(21) Application number: 91850022.4
(22) Date of filing: 04.02.1991
(51) Int. Cl.: H04B 7/06

(54) **Method for antenna selection in a mobile radio communication system**
Antennauswahl in einem mobilen Kommunikationssystem
Procédé de sélection d'antenne dans un système de communication mobile

(30) Priority: 04.10.1990 SE 9001313
(43) Date of publication of application: 08.04.1992
(73) Proprietor: TELEFONAKTIEBOLAGET L M ERICSSON, 126 25 Stockholm (SE)
(72) Inventor: Persson, Bengt Yngve, S-182 51 Djursholm (SE)
(74) Representative: Mrazek, Werner

(56) References cited:
- EP-A- 0 158 327
- EP-A- 0 288 904
- US-A- 3 693 088

## Description

### TECHNICAL FIELD

The present invention relates to a method in a signal bursts transmitting mobile radio communication system for signalling antenna selection during transmission from a base station with a set of antennas. The invention can for instance be utilized in a mobile telephony system of the GSM-type.

### BACKGROUND OF THE INVENTION

In mobile radio communication systems, for instance mobile telephony systems, the signal strength of'the received signal often varies significantly due to so called fading caused by interference between the direct signal between transmitter and receiver and signals that reach the receiver after one or several reflections. This interference sometimes is constructive and sometimes destructive and the signal may almost completely vanish during destructive interference.

A previously known method to solve this problem is to utilize antenna diversity by providing the receiver with two or several separated antennas. During reception the signals from different antennas are combined in a suitable way: for instance that signal that currently is the strongest is chosen. This is possible because the signal strength variations are of such a nature that if the signal strength is very low in a given point it can be significantly higher in a nearby point. This is because the wave length that normally is used for systems of this type is of the order of 30 cm. The described solution is often used on the base station, but is not practical for hand held mobile stations since it requires extra antennas.

However, if the view point is reversed it is found that a base station provided with two transmitter antennas should be able to solve the same problem. If the base station at one instance transmits on one antenna and the signal received by the mobile station is weak due to fading it is very probable that a signal transmitted from the other antenna of the base station will be much stronger. Thus, the problem in such a solution is reduced to order, from the mobile station, the base station to send from the most suitable antenna.

A method for signalling antenna selection to a base station from a mobile station using a tone is e.g. known from US-A- 3693088.

### DESCRIPTION OF THE INVENTION

An object of the present invention is to provide a method by which orders for antenna selection can be sent from the mobile station to the base station in a mobile radio communication system.

The characterising features of the invention are given in the attached patent claims.

### DESCRIPTION OF THE DRAWING

The invention will be described more in detail below with reference to the accompanying drawings, in which:
- Fig. 1: shows a cellular mobile telephony system,
- Fig. 2: shows the structure of a signal burst of a channel in the GSM-standard; and
- Fig. 3: diagrammatically shows a base station with transmitter antenna diversity.

### PREFERRED EMBODIMENTS

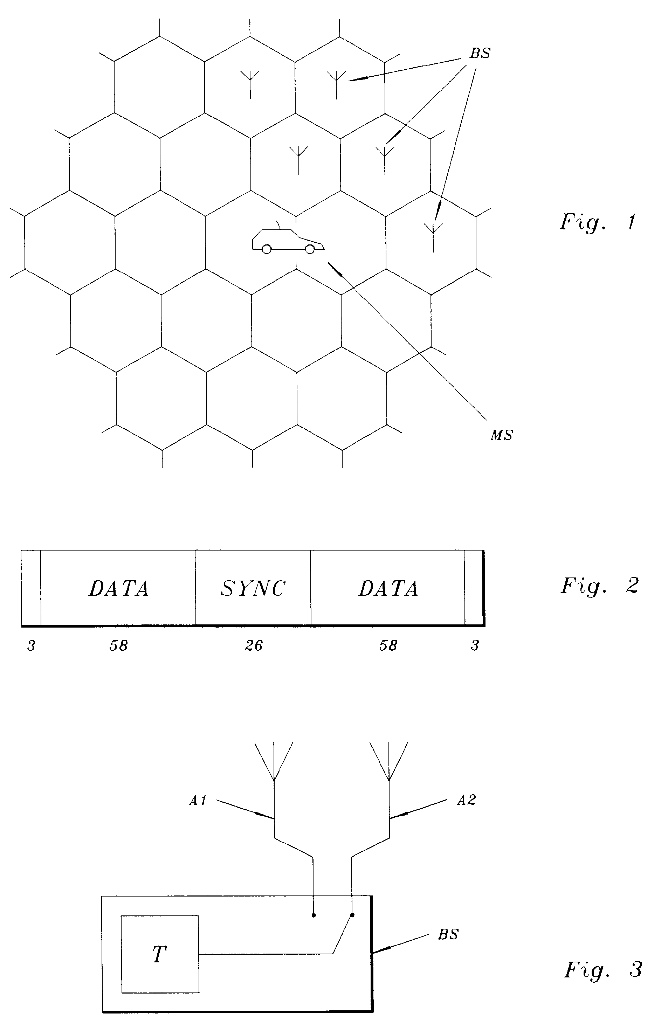

Fig. 1 shows the basic structure of a cellular mobile telephony system. Such a system comprises a number of cells, each cell containing a base station BS. To simplificate matters only a number of such base stations BS are shown in the figure. The base stations BS are in radio contact with a number of mobile stations MS, of which only one is shown in the figure. The mobile station MS communicates with the base station BS in that cell in which it currently is located. As the mobile station MS travels from cell to cell the communication is handed over from the base station BS in one cell to the base station BS in another neighbouring cell in a so called handoff procedure.

Each base station BS transmits on several channels. The transmission can be performed in a time division manner, that is one channel transmits a signal burst and is then "silent" during a certain period of time, so that other channels can send their signal bursts. After said period of time the channel transmits another signal burst, whereafter the procedure is repeated.

An example of the structure of a signal burst in the GSM-standard is shown in Figure 2. Such a burst comprises two DATA fields of 58 bits each. Furthermore the burst comprises a synchronizing field SYNC, the so called synchronizing word and three termination bits, so called tail bits, in each end of the signal burst.

The purpose of the synchronizing word is to synchronize the receiver with the transmitter by comparing the fixed synchronizing word with a received bit sequence in a correlator. The synchronizing word is also used to form a channel estimate for compensation of so called time dispersion. Such time dispersion arises due to the fact that the direct signal and the reflected signal have travelled different distances from transmitter to receiver and therefore arrive with a time delay at the receiver. The compensation of the time dispersion is performed in a known compensator, for instance a Viterbi compensator. The tail bits are provided to terminate this compensation in a known state.

However, in mobile radio communication or mobile telephony systems with relatively small cells the time dispersion is small, which means that reflected signals with a large time delay are weak as compared to the direct signal. An example of such a system is PCN, Personal Communication Network, that is based on the GSM-standard and has cells with a diameter of approximately 100 meters. In accordance with the GSM-standard the bit speed is 270 bits/s, which means that a reflected signal that is delayed one bit as compared to the direct signal has travelled approximately 1 km longer than the direct signal. If each cell has a diameter of approximately 100 m a reflected signal with a time delay corresponding to one bit will therefore have travelled a distance that is approximately 10 times longer than the direct signal. The direct signal will therefore be more than 1000 times stronger than the reflected signal. In such a system with small time dispersion practically no compensation is necessary, since data bits from the direct signal and from the reflected signals will not mix. It is probable that no compensation is necessary if the time dispersion is less than approximately 10⁻⁶ s, which corresponds to approximately 1/4 bit time.

The fact that the compensation can be turned off or even eliminated completely in mobile radio communication systems with small cells means that the six termination bits, tail bits, are made available for other purposes, for instance for signalling antenna selection from the mobile station MS to the base station BS.

In the GSM-standard the length of the signal burst is defined in such a way that half a tail bit in each end falls outside of the actual signal burst. However, due to the smooth way in which the transmitter power has to be turned on/off these bits will only be damped about 1 dB. Thus, there are six tail bits available in each burst, of which two have a somewhat lower quality. Therefore the antenna selection can be transferred with a repetition code (for instance 111111 = switch antenna, 000000 = do not switch antenna) that is decoded by a majority decision at the base station, the outer bits being given the weight 1/2. Hereby a switch between two antennas at the base station BS can be ordered from the mobile station as indicated in Figure 3, where the output from a transmitter T is directed to one of two antennas A1, A2 by a controlled switch.

Another possibility is to let a code, for instance solely ones, activate one transmitter antenna A1, while the other code, for instance solely zeroes, activates the other antenna A2.

Still another possibility is to have more than two antennas at the base station BS and to use as many codes during signalling as there are antennas. As an alternative it is possible also in this case to use only two codes, one code ordering change of antenna and the other code keeping the activated antenna. In such an embodiment the antenna change can be made in a cyclic way within the set of antennas.

Furthermore it is realized that the invention is not limited to use of only six tail bits, but that the inventive idea can be used also in systems that utilize another number of tail bits.

The method of the invention is useful in mobile radio communication systems that are based on only small cells and also in systems based on both small and large cells. In the first case the compensator can be entirely eliminated and the equipment can thus be simplified. In the second case a switch over can be made in the mode of operation of the mobile station, so that a compensator is used in communication with the base station in a large cell, while the tail bits are used for the described transmitter antenna diversity during communication with the base station in a small cell. The choice of mode of operation is controlled by information that is sent to the mobile station for instance during set up or handoff or that is continuously transmitted by the base station on a control channel, a so called broadcast channel.

## Claims

1. A method in a signal bursts transmitting mobile radio communication system for signalling antenna selection to a base station (BS) having a set of antennas from a mobile station (MS) during transmission from said base station (BS), each signal burst from the mobile stations (MS) comprising a predetermined number of tail bits normally intended for compensator termination,
**characterized by**
said tail bits in each signal burst being used for identifying the antenna that is to be activated.

2. The method of claim 1, **characterized** in that said set comprises two antennas.

3. The method of claim 2, **characterized** in that said mobile station (MS) orders transmission on one antenna by setting said tail bits to first predetermined values and orders transmission on the other antenna by setting said tail bits to second predetermined values.

4. The method of claim 2, **characterized** in that said mobile station (MS) orders a change of antenna by setting said tail bits to first predetermined values and continued transmission from the same antenna by setting said tail bits to second predetermined values.

5. The method of claim 1, **characterized** in that said set comprises more than two antennas, that said mobile station (MS) orders change of antenna by setting said tail bits to first predetermined values and continued transmission from the same antenna by setting said tail bits to second predetermined values, said antennas being changed cyclically within said set.

6. The method of any of claims 3-5, **characterized** in that said first predetermined values comprise solely ones while said second predetermined values comprise solely zeroes.

7. The method of claim 6, **characterized** in that during determination at the base station of the order transmitted by said mobile station (MS), a decision regarding which of the two alternatives that has been transmitted is made by summing the received tail bit values and thereafter making a majority decision, so that, if more than half of said tail bits have been received as ones, one alternative is chosen and otherwise the other alternative is chosen.

8. The method of claim 7, **characterized** in that 6 tail bits are used in each signal burst, the first and last tail bit each being given the weight 1/2 during summation while the remaining tail bits are given the weight 1.

## Patentansprüche

1. Verfahren bei einem Signalbursts übertragenden mobilen Radiokommunikationssystem zum Signalisieren einer Antennenauswahl an eine Basisstation (BS) mit einem Satz von Antennen von einer Mobilstation (MS) während einer Übertragung von der Basisstation (BS), wobei jeder Signalburst von der Mobilstation (MS) eine vorbestimmte Anzahl von Schwanzbits umfaßt, die normalerweise bestimmt sind für eine Kompensatorbeendigung,
dadurch **gekennzeichnet**, daß
die Schwanzbits in jedem Signalburst benutzt werden zum Identifizieren der Antenne, die zu aktivieren ist.

2. Verfahren nach Anspruch 1, dadurch gekennzeichnet, daß der Satz zwei Antennen umfaßt.

3. Verfahren nach Anspruch 2, dadurch gekennzeichnet, daß die Mobilstation (MS) eine Übertragung auf einer Antenne anordnet durch Setzen der Schwanzbits auf erste vorbestimmte Werte und eine Übertragung auf der anderen Antenne anordnet durch Setzen der Schwanzbits auf zweite vorbestimmte Werte.

4. Verfahren nach Anspruch 2, dadurch gekennzeichnet, daß die Mobilstation (MS) eine Änderung einer Antenne anordnet durch Setzen der Schwanzbits auf erste vorbestimmte Werte und eine fortgeführte Übertragung von derselben Antenne durch Setzen der Schwanzbits auf zweite vorbestimmte Werte.

5. Verfahren nach Anspruch 1, dadurch gekennzeichnet, daß der Satz mehr als zwei Antennen umfaßt, daß die Mobilstation (MS) eine Antennenänderung anordnet durch Setzen der Schwanzbits auf erste vorbestimmte Werte und eine fortgeführte Übertragung derselben Antenne durch Setzen der Schwanzbits auf zweite vorbestimmte Werte, wobei die Antennen zykisch innerhalb des Satzes geändert werden.

6. Verfahren nach einem der Ansprüche 3 bis 5, dadurch gekennzeichnet, daß die ersten vorbestimmten Werte nur Einsen umfassen, während die zweiten vorbestimmten Werte nur Nullen umfassen.

7. Verfahren nach Anspruch 6, dadurch gekennzeichnet, daß während einer Bestimmung an der Basisstation der Anordnung, die durch die Mobilstation (MS) übertragen wird, eine Entscheidung bezüglich dessen, welche der zwei Alternativen übertragen worden ist, gemacht wird durch Summieren der empfangenen Schwanzbitwerte und anschließendes Treffen einer Majoritätentscheidung, so daß, falls mehr als die Hälfte der Schwanzbits als Einsen empfangen worden sind, eine Alternative gewählt wird und andernfalls die andere Alternative gewählt wird.

8. Verfahren nach Anspruch 7, dadurch gekennzeichnet, daß sechs Schwanzbits benutzt werden bei jedem Signalburst, wobei das erste und letzte Schwanzbit jeweils das Gewicht 1/2 während einer Summation bekommen, während die restlichen Schwanzbits das Gewicht 1 bekommen.

## Revendications

1. Un procédé dans un système de radiocommunication mobile émettant des salves de signal, pour communiquer une information de sélection d'antenne à une station de base (BS) ayant un jeu d'antennes, à partir d'une station mobile (MS) pendant l'émission à partir de la station de base (BS), chaque salve de signal provenant de la station mobile (MS) comprenant un nombre prédéterminé de bits de queue qui sont normalement prévus pour la terminaison du fonctionnement d'un compensateur,
caractérisé en ce que
les bits de queue dans chaque salve de signal sont utilisés pour identifier l'antenne qui doit être activée.

2. Le procédé de la revendication 1, caractérisé en ce que le jeu d'antennes comprend deux antennes.

3. Le procédé de la revendication 2, caractérisé en ce que la station mobile (MS) ordonne l'émission sur une antenne en fixant les bits de queue à des premières valeurs prédéterminées, et elle ordonne l'émission sur l'autre antenne en fixant les bits de queue à des secondes valeurs prédéterminées.

4. Le procédé de la revendication 2, caractérisé en ce que la station mobile (MS) ordonne un changement d'antenne en fixant les bits de queue à des premières valeurs prédéterminées, et la poursuite de l'émission à partir de la même antenne en fixant les bits de queue à des secondes valeurs prédéterminées.

5. Le procédé de la revendication 1, caractérisé en ce que le jeu précité comprend plus de deux antennes, et en ce que la station mobile (MS) ordonne le changement d'antenne en fixant les bits de queue à des premières valeurs prédéterminées et la poursuite de l'émission à partir de la même antenne en fixant les bits de queue à des secondes valeurs prédéterminées, les antennes étant changées de façon cyclique dans le jeu précité.

6. Le procédé de l'une quelconque des revendications 3-5, caractérisé en ce que les premières valeurs prédéterminées comprennent exclusivement des "uns", tandis que les secondes valeurs prédéterminées comprennent exclusivement des zéros.

7. Le procédé de la revendication 6, caractérisé en ce que pendant la détermination, à la station de base, de l'ordre qui est émis par la station mobile (MS), une décision concernant celle des deux possibilités qui a été émise, est prise en faisant la somme des valeurs de bits de queue reçus et en prenant ensuite une décision majoritaire, de façon que si plus de la moitié des bits de queue ont été reçus sous la forme de "uns", une possibilité est choisie, tandis que dans le cas contraire l'autre possibilité est choisie.

8. Le procédé de la revendication 7, caractérisé en ce que 6 bits de queue sont utilisés dans chaque salve de signal, le premier bit de queue et le dernier recevant chacun le poids 1/2 pendant la sommation, tandis que les bits de queue restants reçoivent le poids 1.
